# FASCICULE DE BREVET EUROPEEN

(11) **EP 0 770 155 B1**
(45) Date de publication et mention de la délivrance du brevet: **05.07.2000**
(21) Numéro de dépôt: 96911014.7
(22) Date de dépôt: 02.04.1996
(51) Int. Cl.: D04H 18/00, D04H 1/00, B29B 11/16

(54) **PROCEDE DE FABRICATION DE PIECES STRUCTURALES COMPLEXES MONOBLOC EN MATERIAU COMPOSITE**
VERFAHREN ZUR HERSTELLUNG VON EINSTÜCKIGEN, KOMPLEXEN BAUTEILEN AUS VERBUNDWERKSTOFFEN.
METHOD FOR MAKING COMPLEX INTEGRAL STRUCTURAL MEMBERS FROM A COMPOSITE MATERIAL

(30) Priorité: 13.04.1995 FR 9504449
(43) Date de publication de la demande: 02.05.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: MAUMUS, Jean-Pierre, F-33150 Cenon (FR); MARTIN, Guy, F-33160 Saint-Aubin-du-Médoc (FR)
(74) Mandataire: Joly, Jean-Jacques
(86) Numéro de dépôt international: FR9600492
(87) Numéro de publication internationale: WO9632527

(56) Documents cités:
- EP-A- 0 424 988
- WO-A-92/04492
- GB-A- 2 177 345
- GB-A- 2 251 001

## Description

La présente invention concerne la fabrication de pièces structurales de formes complexes en matériau composite.

De façon bien connue, un procédé de fabrication d'une pièce en matériau composite comprend la réalisation d'une structure de renfort fibreux, ou préforme, et la densification de la préforme par une matrice comblant au moins partiellement la porosité accessible de la préforme.

La préforme fibreuse est réalisée à partir de fibres par exemple sous forme de feutres, mats, fils, câbles, torons, mèches, ... Les fils ou câbles peuvent être bobinés, ou disposés en nappes unidirectionnelles, ou tissés pour former des nappes de tissu, des tresses ou des structures tissées tridimensionnelles.

On confère à la préforme une forme correspondant à celle de la pièce en matériau composite à réaliser. Cela peut être obtenu par bobinage filamentaire, à partir d'éléments unidirectionnels, ou par superposition de strates empilées à plat, ou bobinées, ou drapées sur une forme. Dans ces derniers cas, les strates superposées peuvent être liées entre elles par implantation de fils ou par aiguilletage.

La densification de la préforme peut être réalisée par voie liquide ou par infiltration chimique en phase vapeur.

La voie liquide consiste à imprégner la préforme ou à réaliser celle-ci à partir de fils ou strates pré-imprégnés, la composition d'imprégnation constituant un précurseur de la matrice. La transformation du précurseur, par exemple une résine, est réalisée généralement par traitement thermique.

L'infiltration chimique en phase vapeur est réalisée en plaçant la préforme dans une enceinte à l'intérieur de laquelle est admise une phase gazeuse contenant au moins un précurseur de la matrice. Dans des conditions, notamment de température et de pression, établies dans l'enceinte, la phase gazeuse diffuse au sein de la préforme où un dépôt constitutif de la matrice se forme par décomposition d'un précurseur gazeux, ou réaction entre précurseurs gazeux, au contact des fibres de la préforme.

Les matériaux constitutifs de la préforme et de la matrice sont choisis en fonction de l'application envisagée pour la pièce en matériau composite. Pour des pièces structurales exposées au service à des températures élevées, on fait avantageusement appel à des matériaux composites thermostructuraux. Ces matériaux sont caractérisés par des propriétés mécaniques qui les rendent aptes à constituer des éléments de structure, et par leur capacité à conserver ces propriétés mécaniques à des températures élevées. De tels matériaux sont par exemple les matériaux composites carbone-carbone, ou C-C (préforme en fibres de carbone densifiée par une matrice en carbone), ou les matériaux composites à matrice céramique, ou CMC (préforme en fibres de carbone ou de céramique densifiée par une matrice céramique).

La réalisation de pièces structurales en matériau composite de formes complexes pose des problèmes particuliers. Par forme complexe, on entend ici une forme difficile ou impossible à obtenir par des opérations simples de drapage ou empilement de strates, ou bobinage, c'est-à-dire des formes autres que planes, parallélépidédiques, cylindriques ou de révolution.

Une technique connue pour réaliser des pièces en matériau composite de forme complexe consiste à fabriquer séparément des parties constitutives des pièces ayant des formes simples puis à les assembler. Toutefois, il en résulte inévitablement la présence de discontinuités dans les pièces obtenues, ce qui peut affecter leurs propriétés mécaniques. En outre, il est nécessaire de faire appel à des éléments d'assemblage en matériau composite, notamment des pièces de visserie qui sont coûteuses à réaliser.

Pour éviter au moins en partie ces inconvénients, il a été proposé de réaliser un assemblage de plusieurs parties de formes simples au stade de la préforme et non à celui de la pièce densifiée. L'assemblage peut être effectué en juxtaposant les parties de préformes et en les maintenant en place au moyen d'un outillage en vue de la densification. Ce dernier peut être retiré après une phase de consolidation, c'est-à-dire après une première phase de densification suffisante pour lier les parties de préforme entre elles de sorte que la préforme puisse être manipulée en conservant sa forme. L'utilisation d'un outillage entraîne de réels inconvénients. Lorsque la densification est réalisée par infiltration chimique en phase vapeur, l'outillage, généralement en graphite, est coûteux et fragile. En outre, sa réutilisation nécessite un réusinage pour éliminer les dépôts qui se forment sur lui. En outre, quel que soit le mode de densification, l'outillage est d'autant plus compliqué à réaliser et encombrant que la forme de la pièce à réaliser est complexe.

Il a également été proposé dans le document EP-A-0 390 685 d'assembler les parties de préformes au moyen de chevilles en texture fibreuse. Les parties de préforme assemblées sont co-densifiées. L'assemblage des parties de préforme combiné avec la liaison réalisée par le continuité du matériau de la matrice à leurs interfaces réduit les risques de décohésion de la pièce. Un assemblage des parties de préformes au moyen de chevilles peut aussi éviter le recours à un outillage complet de maintien de la préforme jusqu'à consolidation. Toutefois, cette technique nécessite de faire appel à des éléments de liaison, des chevilles, qui doivent être fabriqués séparément ou formés sur l'une des parties de préformes. Il est nécessaire aussi de prévoir des logements pour les chevilles d'assemblage. De plus, il subsiste une discontinuité entre les parties de préforme.

La présente invention a pour but de fournir un procédé permettant de réaliser des pièces structurales composites de formes complexes ayant un caractère monobloc sans faire appel à des éléments d'assemblage séparés, donc de façon simple et peu coûteuse.

Ce but est atteint du fait que, selon l'invention, la préforme est réalisée uniquement à partir d'une structure fibreuse de base déformable se présentant sous la forme de plaque plane constituée par des strates fibreuses bidimensionnelles superposées liées entre elles par aiguilletage. Des découpes et/ou des fentes sont réalisées dans la structure fibreuse de base et la préforme est réalisée à partir de la structure fibreuse de base en utilisant la déformabilité de celle-ci.

Selon un de ses aspects, le procédé selon l'invention est caractérisé par le fait que la préforme est réalisée à partir d'une plaque unique de structure fibreuse de base dans laquelle sont pratiquées des découpes et/ou des fentes et qui est déformée pour obtenir la préforme désirée dans laquelle la continuité de la structure fibreuse de base est préservée.

Sont ainsi évités les inconvénients pouvant résulter d'une discontinuité du renfort fibreux dans une pièce composite dont la préforme est réalisée en plusieurs parties distinctes.

La préforme peut être réalisée par pliage de la plaque unique de structure fibreuse de base. Des parties de liaison peuvent être découpées dans la plaque de structure fibreuse de manière à pouvoir être engagées mutuellement après déformation de la plaque et maintenir au moins partiellement celle-ci à l'état déformé.

Selon un autre de ses aspects , la préforme est réalisée à partir de plusieurs plaques de structure fibreuse de base dans lesquelles sont pratiquées des découpes et/ou des fentes, et les plaques de structure fibreuse sont assemblées en étant mutuellement imbriquées par déformation d'au moins l'une d'entre elles.

La préforme ainsi réalisée par imbrication mutuelle des plaques de structure fibreuse de base peut conserver sa forme sans assistance de moyens de maintien. Le recours à un outillage de maintien pendant la densification, ou au moins jusqu'à consolidation, n'est alors pas nécessaire, ce qui représente un avantage appréciable.

Selon encore un autre de ses aspects, au moins une fente est pratiquée dans une plaque de structure fibreuse, parallèlement aux faces de celle-ci et la réalisation de la préforme comprend une étape de déformation d'au moins l'une des deux parties de la plaque qui bordent la fente.

Différentes formes souhaitées peuvent alors être obtenues en choisissant l'emplacement et la profondeur de la ou des fentes. La mise en forme de la préforme peut alors être réalisée par déformation d'au moins l'une des deux parties de plaque de structure fibreuse qui bordent une fente. La déformation de l'une et/ou l'autre de ces deux parties peut être même réalisée jusqu'à former une boucle.

Cette technique permet ainsi de réaliser aisément des formes complexes, à partir d'une plaque unique de structure fibreuse, ou à partir de plusieurs plaques.

Le maintien dans sa position déformée d'une partie de plaque bordant initialement une fente peut être assuré au moyen d'un outillage local, ou par imprégnation de la structure fibreuse au moyen d'une résine, avantageusement une résine précurseur du matériau de la matrice.

Des exemples de mise en oeuvre de procédés selon l'invention seront maintenant décrits à titre indicatif, mais non limitatif.

On se référera aux dessins annexés sur lesquels :
- la figure 1A est une vue éclatée, en perspective de composants d'une préforme de moyeu de rouleau;
- la figure 1B montre comment peuvent être assemblés deux composants en forme de demi-disques de la figure 1A;
- la figure 1C montre la préforme de moyeu de rouleau obtenue après un début d'assemblage avec imbrication mutuelle de composants de la figure 1A;
- la figure 2A est une vue en perspective de deux composants d'une préforme d'un mât de chargement constitutif d'un outillage de chargement d'un four;
- la figure 2B montre la préforme de mât de chargement obtenue après assemblage avec imbrication mutuelle des composants de la figure 2A;
- la figure 2C montre le mât de chargement obtenu après densification de la préforme de la figure 2B;
- la figure 3A est une vue éclatée des six composants d'une préforme d'une première forme d'entretoise d'outillage de chargement de four;
- la figure 3B montre comment deux composants complémentaires de la figure 3A peuvent être assemblés;
- la figure 3C montre la préforme d'entretoise obtenue après assemblage avec imbrication mutuelle des composants de la figure 3A;
- la figure 4A est une vue en perspective d'une plaque de structure fibreuse fendue destinée à la réalisation d'une deuxième forme d'entretoise d'outillage de chargement de four;
- la figure 4B est une vue en perspective de la préforme d'entretoise obtenue par déformation de la plaque de la figure 4A;
- la figure 5A est une vue en perspective d'une plaque de structure fibreuse fendue destinée à la réalisation d'une troisième forme d'entretoise d'outillage de chargement de four;
- la figure 5B montre la préforme d'entretoise obtenue par déformation de la plaque de la figure SA;
- la figure 6A montre une plaque de structure fibreuse découpée destinée à la réalisation d'une préforme de traverse;
- la figure 6B montre la préforme de traverse obtenue après déformation de la plaque de la figure 6A;
- les figures 7A et 8A montrent deux plaques de structure fibreuse fendues destinées à la réalisation de préformes de traverses;
- les figures 7B et 8B montrent les préformes de traverses obtenues après déformation des plaques des figures 7A et 8A, respectivement;
- la figure 9A est une vue en perspective d'une plaque de structure fibreuse découpée destinée à la réalisation d'une préforme de goulotte;
- la figure 9B montre la préforme de goulotte obtenue par déformation de la plaque de la figure 9A;
- la figure 10A est une vue partielle en perspective d'une plaque de structure fibreuse découpée destinée à la réalisation d'une préforme de boîte; et
- la figure 10B est une vue partielle de la préforme de boîte obtenue par mise en forme de la plaque de la figure 10A.

Dans la mise en oeuvre de procédés selon l'invention, une préforme d'une pièce en matériau composite est réalisée à partir d'une structure fibreuse de base en forme de plaque de préférence plane. Celle-ci est constituée de strates bidimensionnelles superposées liées entre elles par aiguilletage. Les strates bidimensionnelles sont par exemple constituées de couches de tissu ou de nappes unidirectionnelles de fils ou câbles. Dans ce dernier cas, les directions de deux nappes superposées sont de préférence différentes.

Les procédés selon l'invention utilisent la capacité de déformabilité et compressibilité de la structure fibreuse de base. Ils utilisent également les propriétés de cette structure, lorsqu'elle est déformée, de résister au délaminage, c'est-à-dire à la séparation inter-strates, et de résister à l'arrachement aux fonds de fentes ou découpes formées dans la structure fibreuse, grâce aux liaisons par aiguilletage.

La réalisation de structures fibreuses par superposition et aiguilletage de strates bidimensionnelles est bien connue dans l'état de la technique. On pourra notamment se référer au document FR-A-2 584 106.

Le matériau constitutif des fibres de la structure fibreuse de base est le matériau désiré pour les fibres de la préforme au sein de la pièce composite, ou un précurseur de ce matériau.

Lorsque le matériau des fibres de renfort dans la pièce composite est difficilement aiguilletable sans effet destructif, comme c'est le cas du carbone et des céramiques, l'aiguilletage est réalisé de préférence sur des fibres à l'état de précurseur. Ainsi, par exemple, lorsque le renfort de la pièce composite est en fibres de carbone, la structure fibreuse de base est en fibres de polyacrylonitrile (PAN) préoxydé. La transformation du PAN préoxydé en carbone est effectuée par traitement thermique, de préférence après réalisation de la préforme, la carbonisation apportant une certaine rigidité susceptible de limiter les capacités de déformation de la structure fibreuse. Il en est de même avec d'autres précurseurs, que ce soit des précurseurs du carbone ou de céramique.

Dans les exemples qui suivent, les pièces réalisées sont des pièces en matériau composite thermo-structural à renfort en fibres de carbone destinées à être utilisées dans des conditions thermo-mécaniques relativement sévères. On utilise pour ces différentes pièces des préformes réalisées à partir de structures de base en fibres de PAN préoxydé, étant entendu que d'autres précurseurs du carbone pourraient être utilisés.

Différents moyens peuvent être utilisés pour former les fentes ou découpes dans la structure fibreuse de base, par exemple la découpe par lame vibrante ou la découpe au jet d'eau sous pression. Un procédé de découpe de structure fibreuse au jet d'eau est décrit dans le document FR-A-2 650 973.

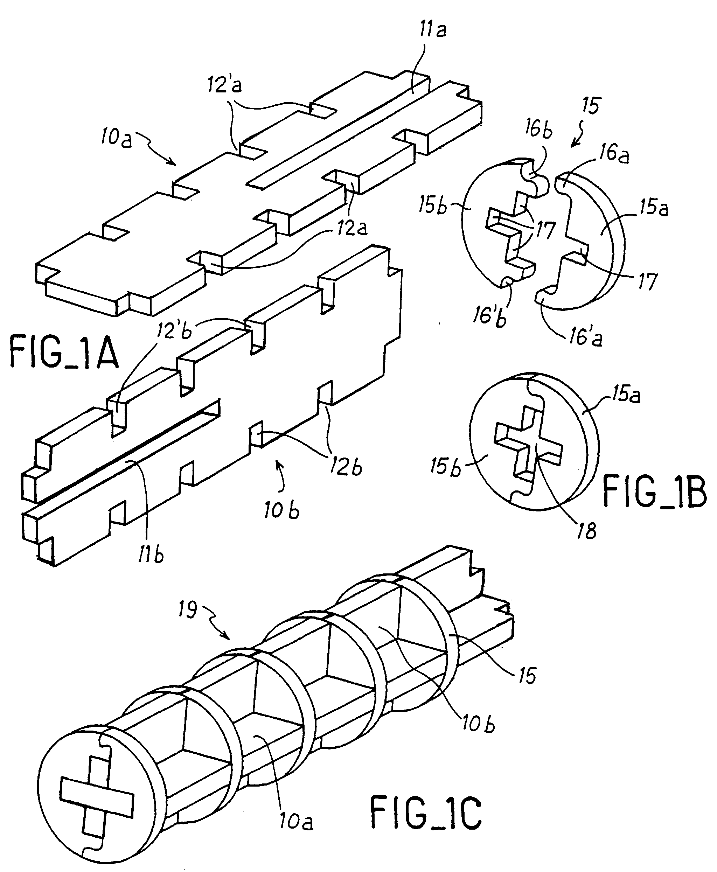

### Exemple 1 (Fig. 1A, 1B, 1C)

Différents composants d'une préforme de moyeu de rouleau sont représentés sur la figure 1A. Les composants sont découpés dans une même plaque, ou plusieurs plaques semblables de structure fibreuse de base.

L'axe est matérialisé par deux barreaux rectangulaires 10a, 10b de mêmes dimensions. Dans chaque barreau est formée une rainure longitudinale médiane 11a, 11b qui s'étend sur la moitié de la longueur du barreau et a une largeur très légèrement inférieure à l'épaisseur du barreau. Les rainures 11a, 11b permettent l'assemblage des barreaux 10a, 10b en direction longitudinale et perpendiculairement l'un à l'autre.

L'assemblage est complété par des disques 15 de diamètre égal à la largeur des barreaux 10a, 10b, et formés chacun de deux demi-disques 15a, 15b. L'un, 15a, des demi-disques se termine par des lèvres 16a, 16'a renflées à leur extrémité et destinées à s'engager dans des logements correspondants 16b, 16'b formés sur l'autre demi-disque 15b. L'assemblage des deux demi-disques est réalisé en les rapprochant parallèlement à leurs faces, les lèvres 16a, 16'a s'engageant dans les logements 16b, 16'b avec déformation et réalisant ainsi un verrouillage des demi-disques 15a, 15b. La figure 1B montre deux demi-disques assemblés.

Des rainures transversales 12a, 12'a, 12b, 12'b sont formées régulièrement de long des deux bords longitudinaux des barreaux 10a, 10b perpendiculairement à ces bords. Les emplacements des rainures sont identiques sur les deux bords longitudinaux des barreaux 10a, 10b de sorte qu'après assemblage de ceux-ci, on trouve quatre rainures dans un même plan transversal.

Des rainures 17 sont par ailleurs formées dans les demi-disques de sorte que ceux-ci, une fois assemblés, forment un disque muni en son centre d'un évidement en croix 18 (figure 1B). La dimension de cet évidement entre les fonds des rainures alignées 17 est égale à la distance séparant les fonds des rainures 12a, 12'a dans le barreau 10a, et à la distance séparant les fonds des rainures 12b, 12'b dans le barreau 10b.

La réalisation de la préforme 19 comprend d'abord l'assemblage longitudinal des deux barreaux 10a, 10b. La compressibilité de la structure fibreuse permet de conférer aux rainures 11a, 11b une largeur légèrement inférieure à l'épaisseur des barreaux. Les barreaux ainsi assemblés avec imbrication mutuelle forment une pièce à section en croix se tenant seule. Elle est rigidifiée par l'insertion, en direction transversale, des demi-disques 15a, 15b aux emplacements des rainures 12a, 12'a, 12b, 12'b et par le verrouillage mutuel des demi-disques (la figure 1B montre la forme prise par les demi-disques assemblés, étant entendu qu'ils sont normalement assemblés de part et d'autre des barreaux assemblés 10a, 10b).

La préforme 19 éventuellement complétée par des pièces en bout est ensuite densifiée par exemple par infiltration chimique en phase vapeur. En dépit de sa forme complexe, la préforme 19 ne requiert aucun outillage de maintien même pour une consolidation.

Le moyeu de rouleau obtenu après densification, par exemple par une matrice carbone, est utilisable dans des applications où il est exposé à des sollicitations thermomécaniques élevées, notamment dans des installations sidérurgiques.

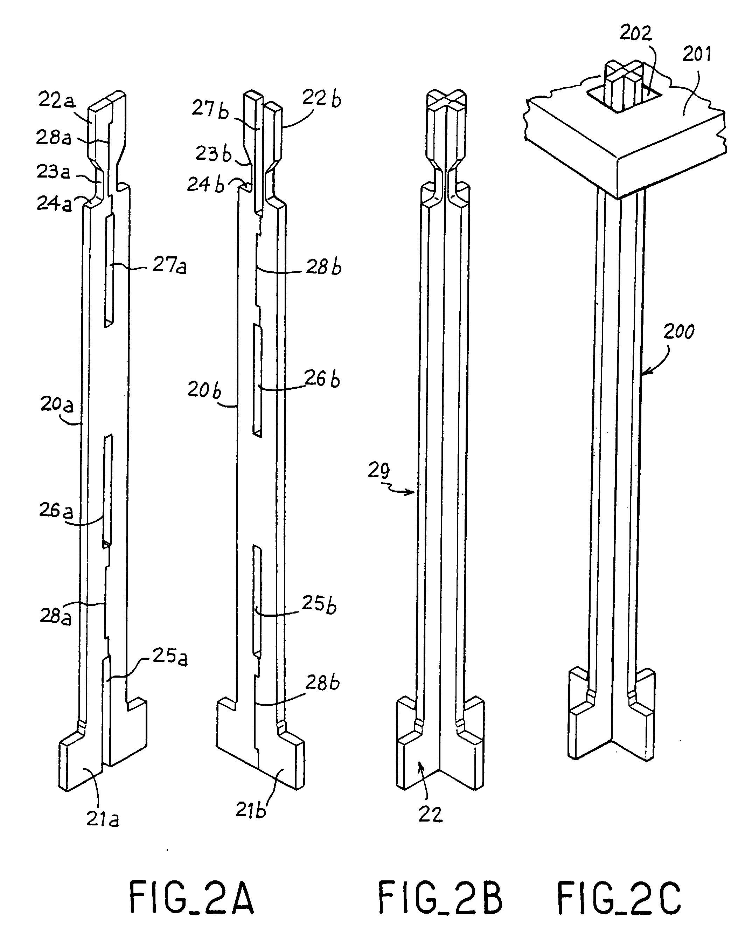

### Exemple 2 (Fig. 2A, 2B, 2C)

Les deux composants d'une préforme de mât de chargement sont représentés sur la figure 2A. Ils sont découpés dans une même plaque de structure fibreuse ou dans deux plaques semblables.

Ces deux composants sont sous forme de deux barreaux 20a, 20b de même longueur. A une extrémité 21a, 21b, les barreaux 20a, 20b présentent une largeur augmentée. A l'autre extrémité, ils offrent une partie de largeur réduite 22a, 22b qui se raccorde au reste du barreau par une partie encore plus étroite 23a, 23b formant un épaulement 24a, 24b.

Dans la partie médiane du barreau 20a sont formées de lumières ou rainures longitudinales 25a, 26a, 27a tandis que dans la partie médiane du barreau 20b sont formées des lumières ou rainures longitudinales 25b, 26b, 27b. Les différentes lumières ou rainures ont une largeur sensiblement égale à l'épaisseur des barreaux. Les rainures ou lumières 25a, 26a, 27a s'étendent au total sur sensiblement la moitié de la longueur du barreau, de même que les rainures ou lumières 25b, 26b, 27b, mais l'emplacement d'une rainure ou lumière dans le barreau 20a correspond à une partie pleine du barreau 20b, et inversement. Des fentes médianes longitudinales 28a sont formées entre la rainure 25a, qui s'ouvre à l'extrémité 21a du barreau 20a, et la lumière 26a, ainsi qu'entre la lumière 27a et l'extrémité 22a. De façon complémentaire, dans le barreau 20b, des fentes médianes longitudinales 28b sont formées entre l'extrémité 21b et la lumière 25b, ainsi qu'entre la lumière 26b et la rainure 27b qui s'ouvre à l'extrémité 22b.

La préforme 29 (figure 2C) est réalisée par imbrication mutuelle des barreaux 20a, 20b perpendiculairement l'un par rapport à l'autre, grâce aux rainures ou lumières et aux fentes 28a, 28b qui permettent un écartement des parties de structure fibreuse bordées par ces fentes afin d'imbriquer les barreaux 20a, 20b l'un dans l'autre. Les parties de structure fibreuse ainsi déformées retrouvent ensuite leur forme initiale et l'on obtient une préforme de mât de chargement 29 à section en croix, avec un piètement 22 formé par les extrémités 22a, 22b.

La préforme 29 est densifiée, par exemple par une matrice carbone obtenue par infiltration chimique en phase vapeur, sans nécessiter d'outillage de maintien. Le mât de chargement en composite C-C 200 ainsi obtenu peut être utilisé comme élément de chargement d'un four de traitement thermique. Comme le montre la figure 2C, un plateau 201 peut être engagé sur le sommet du mât 200, à travers un orifice 202 et repose sur des butées correspondant aux épaulements 24a, 24b.

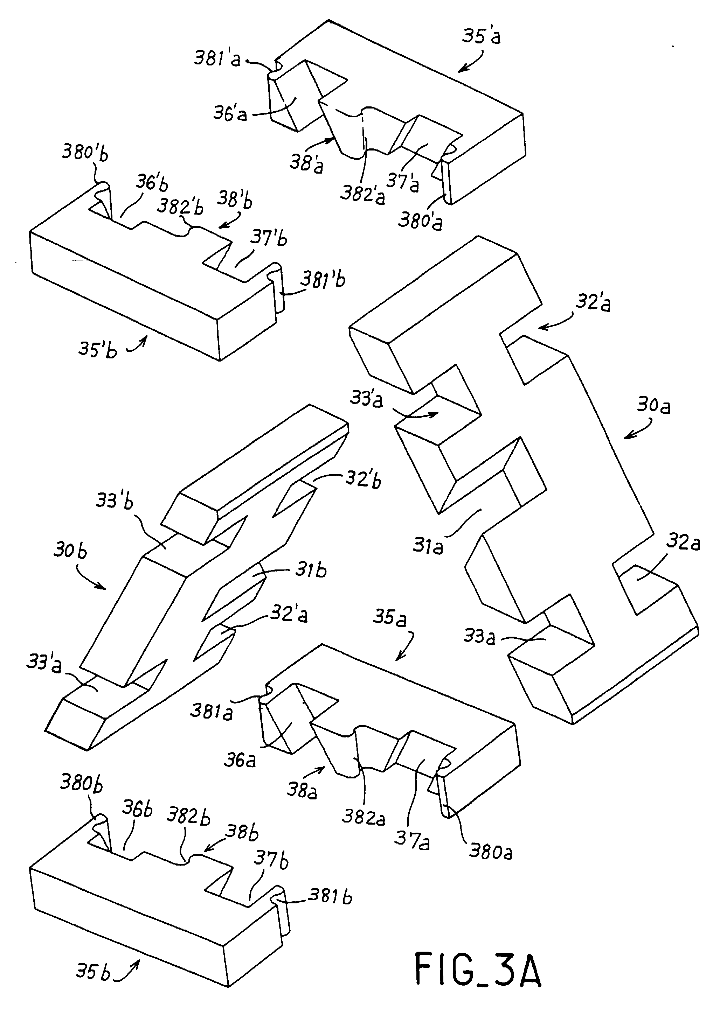

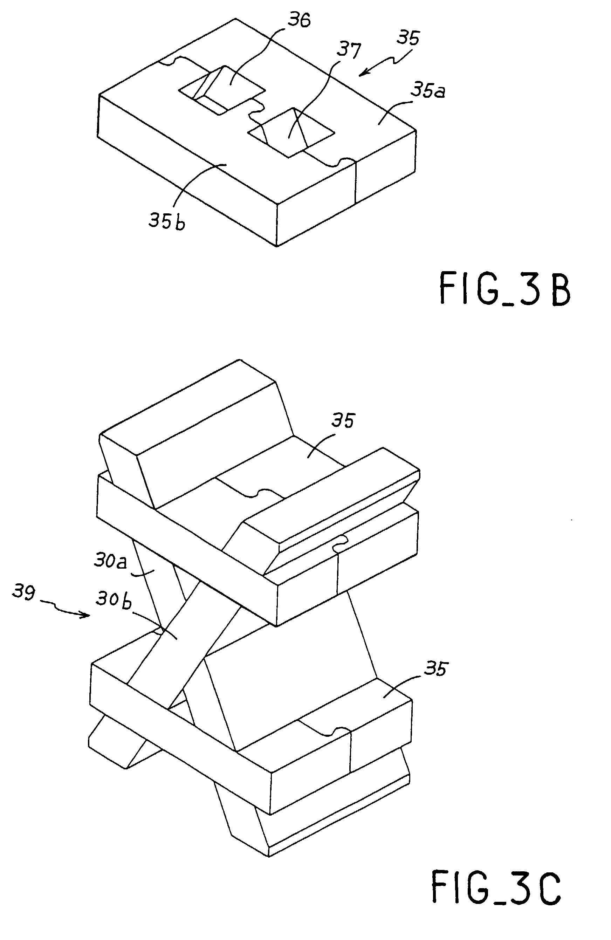

### Exemple 3 (Fig. 3A, 3B, 3C)

La figure 3A montre des composants d'une préforme d'entretoise. Ces composants sont découpés dans une plaque ou plusieurs plaques semblables de structure fibreuse de base.

Les composants de la préforme comprennent deux montants 30a, 30b destinés à être assemblés de façon croisée, et des éléments de traverses inférieure 35a, 35b et supérieure 35'a, 35'b destinés à relier les montants au voisinage de leurs extrémités.

Des rainures transversales 31a, 31b sont formées sensiblement au milieu de la longueur des montants 30a, 30b, sur une profondeur sensiblement égale à la moitié de leur largeur. Les rainures 31a, 31b sont formées avec des parois en biais, c'est-à-dire non perpendiculaires aux faces des montants, afin de pouvoir assembler ceux-ci de façon croisée en les imbriquant mutuellement au niveau des rainures 31a, 31b.

D'autres rainures transversales 32a, 33a sont formées en outre à partir des bords longitudinaux du montant 30a, au voisinage de son extrémité inférieure, en alignement l'une avec l'autre, tandis que deux rainures transversales 32'a, 33'a sont formées à partir des bords longitudinaux du montant 30a, au voisinage de son extrémité supérieure, en alignement l'une avec l'autre. De la même façon, des rainures transversales 32b, 33b, 32'b, 33'b sont formées dans le montant 30b, les parois de ces différentes rainures étant perpendiculaires aux faces des montants.

Les deux éléments de traverse inférieure 35a, 35b sont découpés de manière à former, une fois réunis (figure 3B) un barreau 35 présentant deux lumières 36, 37. Celles-ci sont formées par des rainures 36a, 37a, 36b, 37b découpées dans deux côtés 38a, 38b des éléments 35a, 35b. Les rainures 36a, 37a, 36b, 37b ont une largeur sensiblement égale à l'épaisseur des montants et sont bordées par des parois inclinées par rapport à la perpendiculaire aux faces des éléments 35a, 35b. L'inclinaison de ces parois permet l'assemblage des éléments de traverse 35a, 35b aux montants 30a, 30b disposés de façon croisée, avec engagement mutuel, au niveau des rainures 32a, 33a, 32b, 33b.

De même, des rainures 36'a, 37'a, 36'b, 37'b sont formées sur deux côtés 38'a, 38'b des éléments de traverse supérieure 35'a, 35'b avec des formes et dimensions permettant à ces éléments de traverse d'être assemblés aux montants 30a, 30b avec engagement mutuel, au niveau des rainures 32'a, 33'a, 32'b, 33'b.

Afin d'assurer une bonne tenue à la préforme assemblée, les éléments de traverse sont assemblés avec verrouillage mutuel. A cet effet, aux extrémités des côtés 38a, 38b des éléments 35a, 35b, sont formées des lèvres, respectivement 380a, 380b, qui sont renflées à leur extrémité et coopèrent avec des logements correspondants respectifs 381a, 381b. De façon similaire, des décrochements complémentaires 382a, 382b sont formés dans les parties centrales des côtés 38a, 38b pour pouvoir s'encliqueter lorsque les deux éléments de traverse sont rapprochés l'un de l'autre parallèlement à leurs faces.

De la même façon , les côtés 38'a, 38'b des éléments de traverse 35'a, 35'b présentent des lèvres 380'a, 380'b et logements correspondants 381'a, 381'b ainsi que des décrochements complémentaires 382'a, 382'b.

le mode d'assemblage de la préforme découle à l'évidence de ce qui précède. Les deux montants 30a, 30b étant assemblés, les éléments de traverse sont mis en place de part et d'autre des montants puis rapprochés et verrouillés mutuellement en même temps qu'ils s'imbriquent avec les montants.

Le verrouillage des traverses est réalisé par déformation de la structure fibreuse au niveau des parties de verrouillage.

La figure 3C montre la préforme d'entretoise 39 assemblée (la figure 3B illustre simplement comment les éléments de traverse s'assemblent).

La préforme est ensuite densifiée, sans nécessiter d'outillage de maintien. L'entretoise peut être utilisée comme celle de l'exemple 2, comme élément de chargement d'un four de traitement thermique.

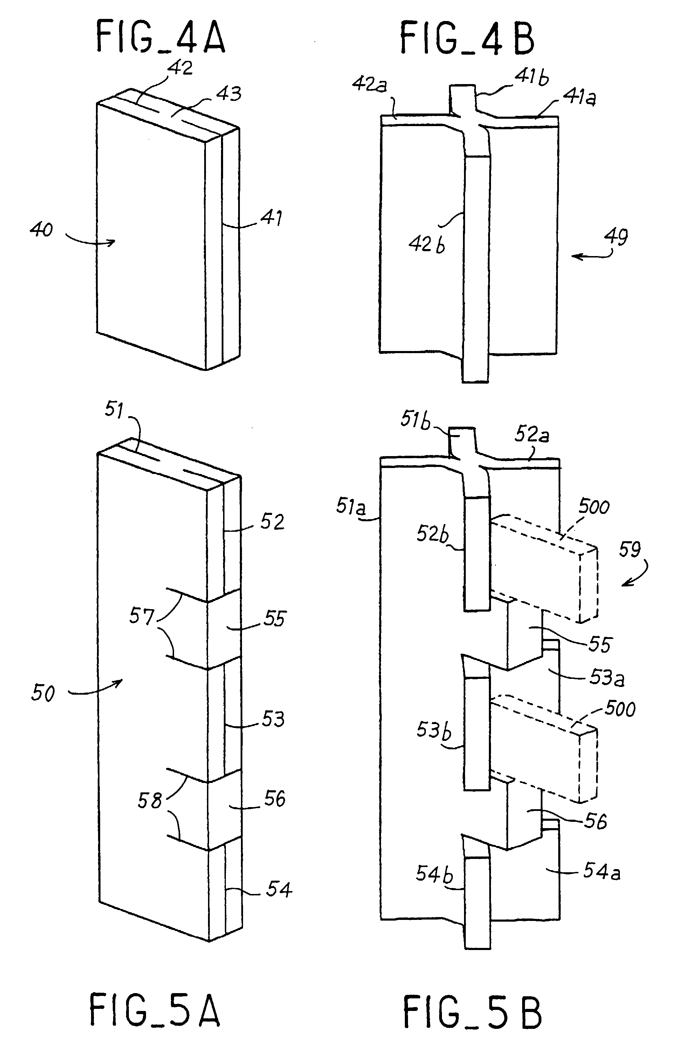

### Exemple 4 (Fig. 4A, 4B)

Dans les exemples qui précèdent, une préforme est réalisée par assemblage de différentes parties.

Les figures 4A et 4B illustrent un mode de réalisation d'une préforme d'entretoise à partir d'une seule plaque 40 de structure fibreuse de base, sans rupture complète de la continuité de celle-ci.

La plaque 40 de forme parallèlépipédique est fendue à mi-épaisseur tout le long de deux côtés opposés, par exemple le long des deux plus longs côtés.

Les fentes 41, 42 sont formées sur une même profondeur, laissant une partie centrale 43 intacte (figure 4A).

Les parties de structures fibreuse 41a, 41b situées de part et d'autre de la fente 41 sont écartées l'une de l'autre de même que les parties de structure fibreuse 42a, 42b situées de part et d'autre de la fente 42. De la sorte, par déformation de la structure fibreuse, on obtient une préforme d'entretoise 49 à section en croix (figure 4B).

On notera que la nature de la structure fibreuse, notamment la liaison par aiguilletage, permet cette déformation sans délaminage et sans arrachement au fond des fentes 41, 42.

Le maintien de la préforme 49 dans sa forme, en vue de sa densification, peut être réalisé au moyen d'un outillage, celui-ci pouvant être relativement léger, juste suffisant pour maintenir les parties de préforme écartées jusqu'à consolidation, la densification de la préforme 49 étant réalisée par infiltration chimique en phase vapeur.

Un autre moyen de conserver la forme de la préforme 49 consiste à imprégner la structure fibreuse avec une résine. Celle-ci peut constituer un précurseur du matériau de la matrice, par exemple en utilisant une résine à fort taux de coke lorsque la densification est réalisée par du carbone. La densification de la préforme peut être continuée par voie liquide ou par infiltration chimique en phase vapeur.

Après densification l'entretoise peut être utilisée pour le chargement d'un four de traitement thermique.

L'utilisation d'une plaque de structure fibreuse 40 dans laquelle la continuité du renfort fibreux est conservée permet d'éviter tout risque de destruction par décohésion entre des parties de préformes fabriquées séparément.

### Exemple 5 (Fig. 5A, 5B)

Les figures 5A et 5B illustrent un procédé de réalisation d'une préforme d'entretoise étagée, également à partir d'une plaque unique 50 de structure fibreuse de base, sans rupture complète de la continuité de celle-ci.

La plaque 50 de forme parallèlépipédique est fendue à mi-épaisseur sur deux côtés opposés, les deux plus longs côtés. Sur un de ces côtés, la fente 51 s'étend sur toute la longueur de la plaque. Sur le côté opposé, plusieurs fentes sont formées, trois fentes 52, 53, 54 dans l'exemple illustré, séparées par des parties non fendues 55, 56. Aux extrémités de celles-ci des fentes transversales 57, 58, perpendiculaires au côté de la plaque 50, sont formées sur une profondeur sensiblement égale à celle des fentes 52, 53,54.

Les parties de structure fibreuse 51a, 51b situées de part et d'autre de la fente 51 sont écartées l'une de l'autre. Il en est de même avec les parties de structure fibreuse 52a, 52b situées de part et d'autre de la fente 52, les parties de structure fibreuse 53a, 53b situées de part et d'autre de la fente 53 et les parties de structure fibreuse 54a, 54b situées de part et d'autre de la fente 54.

On obtient ainsi la préforme 59 de la figure 5B. Le maintien de la préforme dans la forme voulue et la densification peuvent être réalisés comme décrit dans l'exemple 4.

Après densification, les parties non déformées 55, 56 définissent des étages intermédiaires sur lesquels peuvent s'appuyer des pièces 500 (montrées en tirets sur la figure 5B).

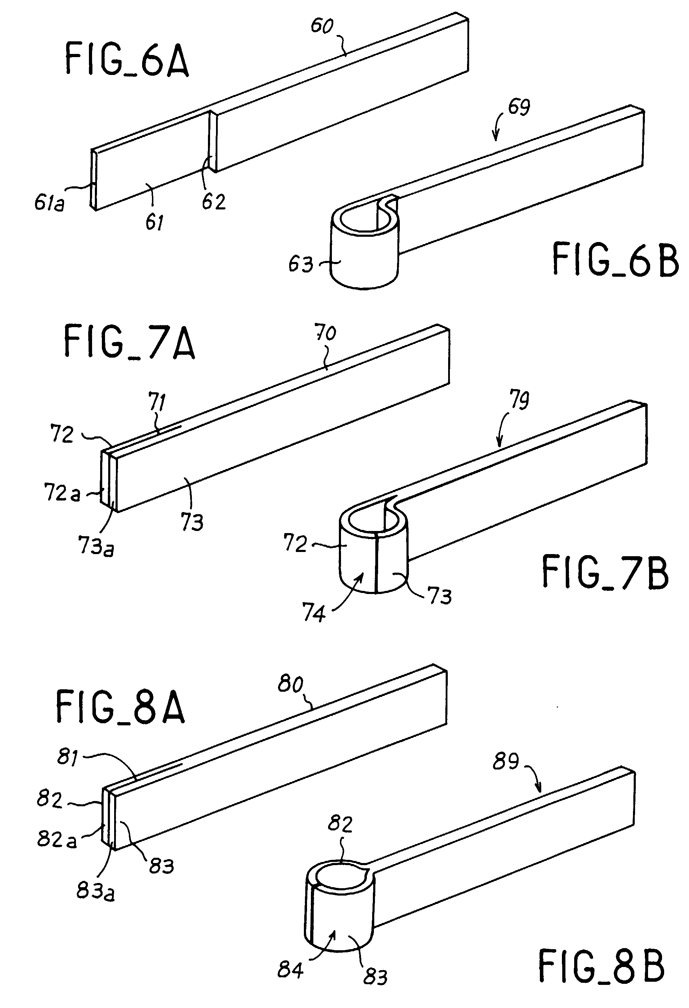

### Exemple 6 (Fig. 6A, 6B)

Les figures 6A et 6B illustrent un mode de réalisation d'une préforme de traverse ayant la forme d'une barre munie d'un anneau à une extrémité.

La préforme est réalisée à partir d'un barreau parallèlépipédique 60 en structure fibreuse de base. A un bout, le barreau 60 est fendu sensiblement à mi-épaisseur et l'une des parties bordant la fente est découpée et retirée, laissant une partie terminale 61 d'épaisseur réduite qui est raccordée au reste du barreau en formant un décrochement 62 (figure 6A).

La partie terminale 61 est repliée sur elle-même pour former une boucle 63 de sorte que sa face d'extrémité 61a vient s'appuyer sur le décrochement 62 (figure 6B). La boucle 63 est située entièrement d'un même côté du barreau 60.

La préforme 69 ainsi obtenue est densifiée par la matrice désirée par voie liquide ou par infiltration chimique en phase vapeur. Un maintien en forme de la préforme, au moins pendant une première phase de densification, est réalisé par un outillage ou par imprégnation. L'outillage est seulement nécessaire pour conserver la forme voulue à la boucle 63.

### Exemple 7 (Fig. 7A, 7B)

Les figures 7A, 7B illustrent un autre mode de réalisation d'une préforme de traverse identique à celle de l'exemple 6. Un barreau parallélépipédique 70 en structure fibreuse de base est fendu sensiblement à mi-épaisseur à l'un de ses bouts (figure 7A). Les deux parties 72, 73 bordant la fente 71 sont incurvées pour former une boucle 74 en aboutant leurs faces d'extrémité 72a, 73a, la boucle 74 étant située d'un même côté du barreau 70. La constitution de la structure fibreuse évite les risques de délaminage ou arrachement au fond de la fente 71. La densification de la préforme est réalisée comme dans l'exemple 6.

### Exemple 8 (Fig. 8A, 8B)

Les figures 8A, 8B illustrent encore un autre mode de réalisation d'une préforme de traverse semblable à celle de l'exemple 6.

Un barreau parallélépipédique 80 en structure fibreuse de base est fendu sensiblement à mi-épaisseur à l'un de ses bouts (figure 8A). Les deux parties 82, 83 bordant la fente 81 sont incurvées symétriquement par rapport au plan de la fente 81 pour former une boucle 84 en aboutant leurs faces d'extrémité 82a, 83a.

On obtient ainsi une préforme de traverse avec une barre munie d'un anneau, l'ensemble étant symétrique par rapport au plan médian parallèle aux faces de la barre. La préforme est densifiée comme dans l'exemple 6.

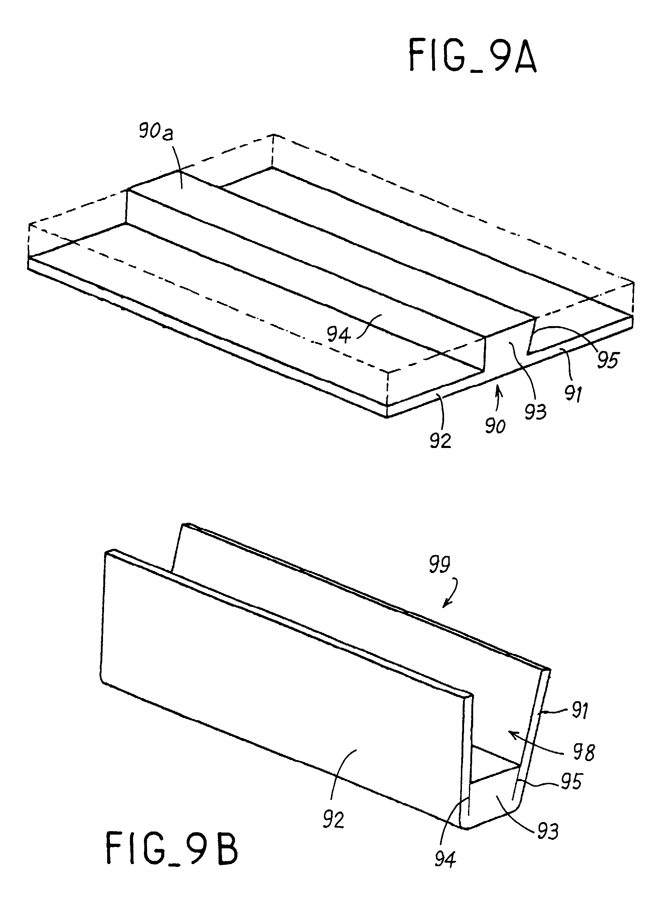

### Exemple 9 (Fig. 9A, 9B)

Les figures 9A, 9B illustrent un mode de réalisation d'une préforme de goulotte.

La préforme est réalisée à partir d'une plaque rectangulaire de structure fibreuse de base 90. A partir d'une de ses faces 90a, et le long de ses grands côtés, la plaque 90 est découpée afin de laisser subsister deux ailes 91, 92 qui se raccordent à une partie centrale intacte 93. Les ailes 91, 92 ont une même largeur, sensiblement supérieure à celle de la partie centrale 93, et une épaisseur sensiblement réduite par rapport à celle de la plaque 90.

La découpe de la plaque 90 à partir de la face 90a est réalisée de manière à conférer aux faces latérales 94, 95 de la partie centrale 93 une légère inclinaison par rapport à la normale à la plaque. Ainsi, la partie centrale 93 a une largeur légèrement croissante depuis sa jonction avec les ailes 91, 92 jusqu'à la face 90a.

La préforme 99 est réalisée en repliant les ailes 91, 92 contre les faces 94, 95, donnant une forme de goulotte 98 légèrement évasée.

En vue de sa densification, la préforme 99 est maintenue dans sa forme au moyen d'un outillage. Il peut être limité à des moyens maintenant les ailes 91, 92 appliquées contre les faces 94, 95.

Pour fabriquer une goulotte utilisable à des températures élevées, par exemple pour faire circuler du métal fondu, la densification de la préforme 99 est réalisée avec une matrice en matériau réfractaire, par exemple une matrice en un matériau céramique tel que le carbure de silicium (SiC). La densification par une matrice SiC peut être réalisée par infiltration chimique en phase vapeur.

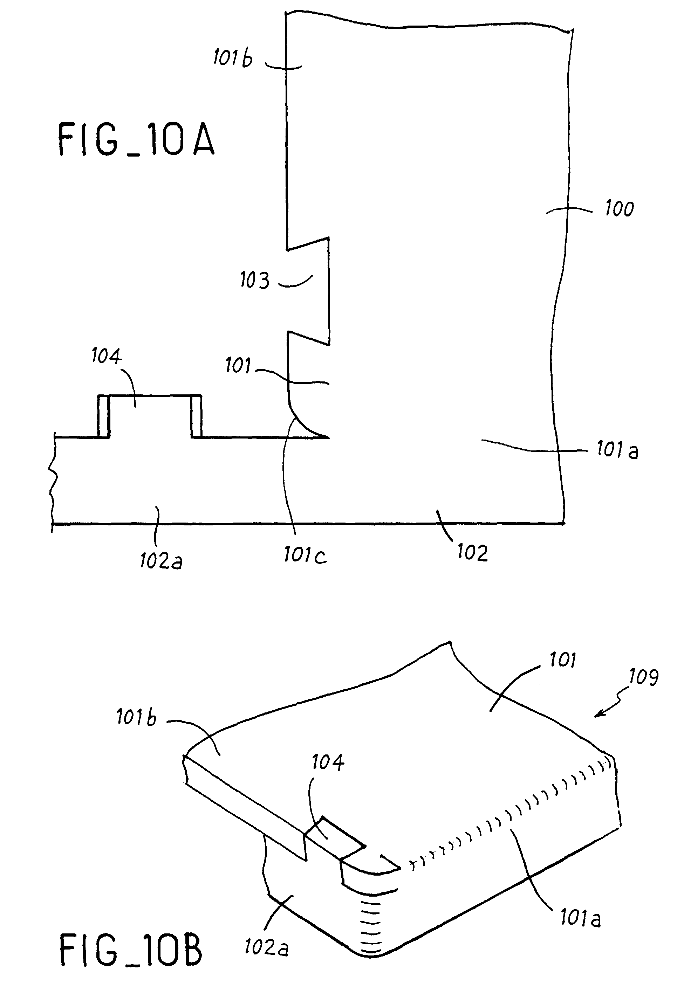

### Exemple 10 (Fig. 10A, 10B)

Les figures 10A, 10B illustrent partiellement un mode de réalisation d'une préforme de boîte, seule la réalisation d'un coin de boîte étant montrée, les autres coins pouvant être formés de la même façon.

La préforme est réalisée à partir d'une plaque de structure fibreuse de base 100. Celle-ci est découpée à la manière d'un flan pour former une préforme de boîte par pliage.

La plaque 100 est découpée pour former une partie 101 destinée à constituer le fond et des parties 102 (une seule représentée sur la figure 10A) destinée à former un rebord, la structure fibreuse de la plaque conservant son intégrité. Les parties 102 sont disposées le long de deux côtés opposés 101a de la partie de fond 101 et s'étendent au-delà de ceux-ci à leurs extrémités. Sur chacun des deux autres côtés 101b de la partie de fond 101, et à une distance relativement courte de chacune de leurs extrémités, est formée au moins une partie de liaison mâle ou femelle, par exemple une rainure 103. Au moins une partie de liaison de forme complémentaire, ici une partie en saillie 104 est formée sur le côté adjacent de la partie de rebord 102.

La préforme de boîte 109 est réalisée par repliage de chaque partie de rebord 102 le long de la zone 101a qui la rattache à la partie de fond 101, puis par repliage de chaque extrémité 102a des parties de rebord qui s'étend au-delà de cette zone 101a. Les parties de liaison 103, 104 sont disposées de manière à s'engager l'une dans l'autre après repliage des extrémités 102a (figure 10B).

On notera que les côtés 101b sont raccordés aux côtés 101a par des arrondis 101c dont la forme correspond à celle des coins arrondis de la préforme de boîte.

En outre, on pourra conférer aux parties de liaison 103, 104 des formes permettant un blocage mutuel, l'une au moins, par exemple la rainure 103 ayant une forme en queue d'aronde. De la sorte, en mettant à profit la compressibilité de la structure de base, la préforme 109 conserve sa forme sans nécessiter la présence d'un outillage en vue de la densification.

La densification de la préforme 109 est réalisée par voie liquide ou par infiltration chimique en phase vapeur pour obtenir la matrice souhaitée. La boîte en matériau composite ainsi réalisée, par exemple une boîte en matériau composite C-C ou en CMC, peut être utilisée comme plateau pour supporter des pièces à traiter dans un four. Dans ce cas, les rebords sont tournés vers le bas et les coins de boîte constituent des points d'accrochage pour des dispositifs de manipulation ou déplacement du plateau.

## Revendications

1. Procédé de fabrication d'une pièce structurale en matériau composite ayant une forme complexe, comprenant la réalisation d'une préforme fibreuse ayant sensiblement la forme de la pièce à fabriquer, et comprenant des strates fibreuses bidimensionnelles liées entre elles par aiguilletage, et la densification de la préforme par un matériau constitutif de la matrice du matériau composite,
caractérisé en ce que l'on utilise pour la préforme uniquement une structure fibreuse de base déformable se présentant sous la forme de plaque plane constituée par des strates fibreuses bidimensionnelles superposées liées entre elles par aiguilletage, l'on pratique des découpes et/ou des fentes dans la structure fibreuse de base, et l'on réalise la préforme à partir de la structure fibreuse de base découpée et/ou fendue en utilisant la déformabilité de celle-ci.

2. Procédé selon la revendication 1, caractérisé en ce que la préforme est réalisée à partir d'une plaque unique de structure fibreuse de base dans laquelle sont pratiquées des découpes et/ou des fentes et qui est déformée pour obtenir la préforme désirée dans laquelle la continuité de la structure fibreuse de base est préservée.

3. Procédé selon la revendication 1, caractérisé en ce que des parties de liaison sont découpées dans la plaque de structure fibreuse de manière à pouvoir être engagées mutuellement après déformation de la plaque et maintenir au moins partiellement celle-ci à l'état déformé.

4. Procédé selon la revendication 3, caractérisé en ce que la préforme est mise en forme par pliage de la plaque de structure fibreuse.

5. Procédé selon la revendication 1, caractérisé en ce que la préforme est réalisée à partir de plusieurs plaques de structure fibreuse de base dans lesquelles sont pratiquées des découpes et/ou des fentes, et les plaques de structure fibreuse sont assemblées en étant mutuellement imbriquées par déformation d'au moins l'une d'entre elles.

6. Procédé selon la revendication 5, caractérisé en ce que la préforme réalisée par imbrication mutuelle des plaques de structure fibreuse de base conserve sa forme sans assistance de moyens de maintien.

7. Procédé selon l'une quelconque des revendications 1 à 6, caractérisé en ce qu'au moins une fente est pratiquée dans une plaque de structure fibreuse, parallèlement aux faces de celle-ci et la réalisation de la préforme comprend une étape de déformation d'au moins l'une des deux parties de la plaque qui bordent la fente.

8. Procédé selon la revendication 7, caractérisé en ce que l'une au moins des deux parties de la plaque qui bordent la fente est pliée de manière à être écartée du plan médian de la plaque parallèle aux faces de celle-ci.

9. Procédé selon la revendication 8, caractérisé en ce que les deux parties de la plaque qui bordent la fente sont écartées l'une de l'autre.

10. Procédé selon l'une quelconque des revendications 8 et 9, caractérisé en ce que l'une au moins des deux parties de la plaque qui bordent la fente est repliée pour former une boucle.

## Patentansprüche

1. Verfahren zum Herstellen eines Verbundwerkstoff-Bauteils komplexer Gestalt, umfassend das Anfertigen eines Faser-Vorformlings, der etwa die Gestalt des herzustellenden Bauteils aufweist und untereinander durch Nadelung verbundene, zweidimensionale Faserlagern aufweist, und das Verdichten des Vorformlings mit einem Matrixmaterial des Verbundstoffs, dadurch gekennzeichnet, daß für den Vorformling einzig eine verformbare Faser-Basisstruktur in Form einer Formplatte verwendet wird, die durch zweidimensionale, übereinandergelegte und durch Nadelung untereinander verbundene Faserlagen gebildet ist, daß in der Faser-Basisstruktur Ausschnitte und/oder Schlitze gebildet werden, und daß der Vorformling ausgehend von der mit Ausschnitten und/oder Schlitzen versehenen Faser-Basisstruktur unter Ausnutzung von deren Verformbarkeit angefertigt wird.

2. Verfahren nach Anspruch 1, dadurch gekennzeichnet, daß der Vorformling ausgehend von einer einzigartigen Platte der Faser-Basisstruktur angefertigt wird, in der Ausschnitte und/oder Schlitze ausgebildet werden, und die derart verformt wird, daß der gewünschte Vorformling in der Weise erhalten wird, daß in ihm die Kontinuität der Faser-Basisstruktur erhalten bleibt.

3. Verfahren nach Anspruch 1, dadurch gekennzeichnet, daß in der Faserstruktur-Platte in der Weise Verbindungsteile ausgeschnitten werden, daß diese nach Verformung der Platte miteinander in Eingriff stehen und zumindest teilweise diesen Verformungszustand beibehalten.

4. Verfahren nach Anspruch 3, dadurch gekennzeichnet, daß der Vorformling seine Gestalt durch Biegen der Faserstrukturplatte erhält.

5. Verfahren nach Anspruch 1, dadurch gekennzeichnet, daß der Vorformling aus mehreren Faser-Basisstrukturen-Platten angefertigt wird, in denen Ausschnitte und/oder Schlitze ausgebildet sind, wobei die Faserstruktur-Platten unter gegenseitiger Verzahnung durch Verformung zumindest einer der Platten zusammengefügt werden.

6. Verfahren nach Anspruch 5, dadurch gekennzeichnet, daß der durch gegenseitige Verzahnung der Faser-Basisstrukturplatten angefertigte Vorformling seine Form ohne Zuhilfenahme von Stützmitteln beibehält.

7. Verfahren nach einem der Ansprüche 1 bis 6, dadurch gekennzeichnet, daß zumindest ein Schlitz in einer Faserstrukturplatte ausgebildet wird, parallel zu den Flachseiten der Platte, und daß die Anfertigung des Vorformlings eine Phase der Verformung zumindest eines der beiden Teile der Platte benachbart zu dem Schlitz umfaßt.

8. Verfahren nach Anspruch 7, dadurch gekennzeichnet, daß zumindest eines der beiden Teile der Platte, die an den Schlitz angrenzen, in der Weise gebogen wird, daß es aus der zu den Flachseiten der Platte parallelen Mittelebene herausläuft.

9. Verfahren nach Anspruch 8, dadurch gekennzeichnet, daß die beiden an den Schlitz angrenzenden Teile der Platte voneinander weglaufen.

10. Verfahren nach einem der Ansprüche 8 und 9, dadurch gekennzeichnet, daß zumindest eines der beiden an den Schlitz angrenzenden Teile der Platte zur Bildung einer Öse zurückgebogen ist.

## Claims

1. A method of manufacturing a structural part of composite material and of complex shape, the method comprising making a fiber preform having substantially the shape of the part to be manufactured, and being made up of two-dimensional fiber plies bonded together by needling, and densifying the preform with a material constituting the matrix of the composite material,
characterized in that the preform is made only of a deformable base fiber structure in the form of a plane plate constituted by superposed two-dimensional fiber plies bonded together by needling, cuts and/or splits are formed in the base fiber structure, and the preform is made from the cut and/or split base fiber structure by making use of the deformability thereof.

2. A method according to claim 1, characterized in that the preform is made from a single plate of base fiber structure in which cuts and/or splits are formed and which is deformed to obtain the desired preform in which continuity of the base fiber structure is preserved.

3. A method according to claim 1, characterized in that connection portions are cut out in the fiber structure plate so as to be capable of being mutually engaged after deformation of the plate and hold it at least in part in the deformed state.

4. A method according to claim 3, characterized in that the preform is shaped by folding the fiber structure plate.

5. A method according to claim 1, characterized in that the preform is made from a plurality of base fiber structure plates in which cuts and/or splits are formed, and the fiber structure plates are assembled together, being mutually interfitted by deforming at least one of them.

6. A method according to claim 5, characterized in that the preform made by mutually interfitting base fiber structure plates conserves its shape without assistance from holding means.

7. A method according to any one of claims 1 to 6, characterized in that at least one split is formed in a fiber structure plate parallel to the faces thereof, and the making of the preform includes a step of deforming at least one of the two plate portions bordering the split.

8. A method according to claim 7, characterized in that at least one of the two plate portions bordering the split is folded so as to be moved away from the midplane of the plate parallel to the faces thereof.

9. A method according to claim 8, characterized in that the two plate portions bordering the split are moved away from each other.

10. A method according to claim 8 or 9, characterized in that at least one of the two plate portions bordering the split is folded over to form a loop.
